# EUROPEAN PATENT SPECIFICATION

(11) **EP 0 570 131 B1**
(45) Date of publication and mention of the grant of the patent: **16.06.1999**
(21) Application number: 93303331.8
(22) Date of filing: 28.04.1993
(51) Int. Cl.: H04B 1/66

(54) **Compression encoding and decoding of digital audio signals**
Kompressionskodierung und -dekodierung digitaler Audiosignale
Codage et décodage par compression des signaux audio numériques

(30) Priority: 07.05.1992 JP 14110392
(43) Date of publication of application: 18.11.1993
(73) Proprietor: SONY CORPORATION, Tokyo (JP)
(72) Inventor: Akagiri, Kenzo, c/o Patents Division, Tokyo 141 (JP)
(74) Representative: Williams, Janice

(56) References cited:
- EP-A- 0 525 809
- GLOBECOM '90 vol. 1, December 1990, NY pages 518 - 522 MAHIEUX ET AL 'Transform Coding of Audio Signals at 64 Kbits/s'
- EBU REVIEW- TECHNICAL no. 230, August 1988, BRUSSELS BE pages 158 - 181 THEILE ET AL 'Low bit-rate coding of high-quality audio signals An introduction to the MASCAM system'

## Description

This invention relates to compression encoding and decoding of digital audio signals. A method and a device for high efficiency encoding and decoding of digital audio data are provided. In particular, though not exclusively, there is provided a method and device for data compression and expansion by compressing the digital audio data by high efficiency encoding, transmitting or recording the encoded data on a recording medium and decoding or expanding the transmitted or recorded data.

A variety of methods are known for high efficiency encoding of audio signals by way of data compression.

For example, a sub-band coding (SBC) technique is known which belongs to the non-time-block-forming frequency band dividing system in which time-domain audio signals are divided into plural frequency bands and encoded without being previously divided into plural time-domain blocks.

Among the prior-art techniques known to the present inventors there are those of US Patents Nos. US-A-4,972,484 and US-A-5,109,417 concerning a bit allocation method responsive to input signals. However, with these prior-art methods, bit allocation is achieved in a manner dependent solely on the energies of the input signals.

Also known is a time-block-forming frequency band dividing system, or a transform encoding system, according to which time-domain signals are divided by orthogonally transforming the time-domain signals into frequency-domain signals and the resulting frequency-domain signals are encoded from band to band and from block to block.

Also known is a high efficiency encoding method which combines the above-mentioned sub-band encoding and transform encoding systems. With this method, the time-domain signals are divided into plural frequency bands by SBC, and the resulting signals of the respective frequency bands are divided along the time scale into time blocks which are orthogonally transformed into frequency-domain signals which are encoded from band to band.

The filter employed for dividing the time-domain signals into plural frequency bands may be, for example, a QMF filter, as discussed in detail in R. E. Crochiere, Digital Coding of Speech in Sub-bands, Bell Syst. Tech. J. Vol.55, No.8, 1976.

The method for dividing time-domain signals into equal-band time-domain signals is discussed in detail in ICASSP 83, BOSTON Polyphase Quadrature Filters - A New Sub-band Coding Technique, by Joseph H. Rothweiler.

In executing the above-mentioned orthogonal transform, input audio signals are divided into blocks at an interval of a predetermined time period called a frame and orthogonal transformation is executed for each of the blocks. The orthogonal transform may be exemplified by discrete Fourier transform (DFT), discrete cosine transform (DCT) and modified discrete cosine transform (MDCT), in all of which time-domain signals are transformed into frequency-domain signals. MDCT is discussed in ICASSP 1987 Sub-band/Transform Coding Using Filter Bank Designs Based on Time-Domain Aliasing Cancellation, J. P. Princen, A. B. Bradley Univ. of Surrey Royal Melbourne Inst. of Tech.

As the width of frequency division, employed for quantization from one frequency component to another, a width of frequency division which takes human auditory characteristics into account, that is the width of frequency division according to the critical band, is employed, in which audio signals are divided into a plurality of, for example 25, bands, so that the bandwidth becomes broader the higher the band frequency.

For encoding data of each frequency band, bit allocation is made for each band in a predetermined or adaptive manner for encoding. For example, coefficient data for each frequency band from the MDCT processing is encoded by adaptive bit allocation.

The following two methods are known for adaptive bit allocation. In IEEE Transactions of Acoustic, Speech, and Signal Processing, vol.ASSP-25, No.4, August 1977, there is shown a technique of allocating bits based on a signal magnitude from one band to another. With this system, the quantization noise spectrum becomes flat for each frequency range such that the noise energy is minimized. However, this system has a drawback in that, since masking effects concerning the human auditory sense are not utilized, the sense of noise heard by the hearer is not optimized.

For overcoming this deficiency, coefficients known as shaping factors may be utilized at the time of decision of bit allocation for adapting the quantization noise spectrum to the human auditory sensation. However, even when a sinusoidal wave having a frequency of e.g. 1 kHz is entered for measurement of its characteristics with this method, the allocated bits are not concentrated at the frequency of the sinusoidal wave, so that characteristic values cannot be improved as desired.

The masking effects, which are among the characteristics of the human auditory sense, mean the effects in which a tone is masked by another tone and becomes inaudible.

The masking effects may be classified into time-domain masking effects and concurrent frequency-domain masking effects. Due to the masking effects, a noise, if present, may be concealed and cannot be heard.

For this reason, the noise in actual audio signals, if present within a masking range, is termed an allowable noise.

The masking range may also be classified into forward masking effects and backward masking effects.

Forward masking means the effect of masking of a temporally succeeding tone by a temporally preceding tone. Conversely, backward masking means the effect of masking of a temporally preceding tone by a temporally succeeding tone.

The backward masking is known to exhibit masking effects for a markedly shorter time than in the case of forward masking.

In ICASSP 1980, The Critical Band Coder Digital Encoding of the Perceptual Requirements of the Auditory System, M. A. Kransner MIT, there is disclosed a method of deriving a signal-to-noise ratio required for each band by utilizing auditory masking for allocating bits in a fixed manner.

This method has a deficiency in that, in measuring characteristics of input sinusoidal waves, the measured values cannot be improved as desired because of the fixed manner of the bit allocation.

In this manner, if bits are allocated based on the signal magnitude from band to band for minimizing quantization noise energies, the auditory noise level is not minimized. On the other hand, if, in consideration of the masking effects, fixed noise shaping factors are introduced, or if bits are allocated in a fixed manner from band to band, it is difficult to achieve satisfactory signal-to-noise characteristics for an input sinusoidal wave.

EP-A-0 525 809, published on 3 February 1993, discloses a system for bit allocation in compression encoding of speech signals in which the digital input signal is divided along both the time and the frequency scale to form a plurality of sub-blocks. The total number of bits available for encoding the sub-blocks includes fixed bits and variable bits. The fixed bits are allocated according to a selected one of a predetermined number of bit allocation patterns, selected according to signal properties to take advantage of differences in sensitivity of the ear to different frequencies. The variable bits are allocated according to signal energy in the sub-blocks. The fixed and variable bits are added to determine the total number of bits allocated to each sub-block.

According to the present invention there is provided a method for bit allocation in compression encoding of digital speech signals in which the digital speech signals are divided at a predetermined time interval into plural frequency bands so as to be sub-divided along both the time scale and the frequency scale to form a plurality of sub-blocks and data encoding is performed using an allocated number of bits determined for each of said sub-blocks, the method comprising:
dividing the total number of bits that may be used for bit allocation into at least two portions;
allocating bits of one of said portions in dependence upon an allowable noise spectrum based on aural characteristics, said aural characteristics comprising at least a masking threshold and a minimum audibility curve;
allocating bits of the remaining portion in dependence upon signal intensities in each of said sub-blocks; and
combining the bits of said two portions together for each of said sub-blocks to determine the number of bits allocated to each of said sub-blocks.

The present invention also provides a device for bit allocation in compression encoding as set forth in claim 7.

Embodiments of the present invention provide a high efficiency encoding and decoding method and device, that is a data compression method and device, in which digital audio input signals are divided at a predetermined time interval into plural frequency bands for forming sub-blocks by sub-division along both the time scale and along the frequency scale, and the number of allocated bits for encoding and decoding is determined for each of the sub-blocks. The bits that may be used for bit allocation of the digital audio signals are divided into at least two portions. The bits of one of the two portions are dependent on the allowable noise spectrum based on aural characteristics, in particular masking effects and a minimum audibility curve, and preferably an equal-loudness curve, while those of the remaining portion are dependent on signal intensities, that is signal energies, in each of the sub-blocks. The bits of these two portions are combined to form the allocated bits.

Embodiments of the present invention provide a high efficiency encoding method and device which are desirable from the viewpoint of the auditory sense and which enable a lone spectrum input, such as a sinusoidal wave having a frequency of 1 kHz, to be encoded by bit allocation assuring optimum signal-to-noise characteristics.

In addition to the bits used for bit allocation for the digital audio input signals, certain bits may be allocated for subsidiary information by bit allocation means. The subsidiary information may include at least the floating information employed in block floating and the bit length information indicating the length of the allocated bits.

With high efficiency encoding methods embodying the present invention, the data signals compressed and encoded using the allocated bits may be transmitted over or received via a transmission channel or recorded.

In embodiments of the high efficiency encoding method of the present invention, the digital audio input signals are divided along the frequency scale without being formed into time blocks and are further divided into predetermined frequency bands for forming the sub-blocks.

In embodiments of the present invention, the total number of bits that may be employed for bit allocation of the digital input signals is divided into a portion dependent on the allowable noise spectrum based on aural characteristics and another portion dependent on intensities of signals in each of the sub-blocks. Consequently, the noise level as perceived by the aural sense may be diminished even with input audio signals exhibiting a wide spectral distribution, such as music signals. If the input signal has a spectrum with a larger signal in a frequency range, such as a sinusoidal wave, bit allocation may be concentrated in this range to improve the S/N ratio.

Embodiments of the invention will now be described, by way of example, with reference to the accompanying drawings in which:

Fig.1 is a block circuit diagram showing an example of a data compression side of a high efficiency encoding device embodying the present invention.

Fig.2 is a diagrammatic view showing frequency and time division of signals by the device shown in Fig.1.

Fig.3 is a block circuit diagram showing an example of an adaptive bit allocation and encoding circuit employed in the device of Fig.1.

Fig.4 is a graph showing a Burke spectrum.

Fig.5 is a block circuit diagram for illustrating a more detailed constitution of a circuit for calculating the aurally allowable noise.

Fig.6 is a graph showing a masking spectrum.

Fig.7 is a graph showing a minimum audibility curve and a masking spectrum combined together.

Fig.8 is a graph showing an example of bit allocation for a substantially flat spectral input.

Fig.9 is a graph showing an example of an input signal spectrum and a quantization noise spectrum for a substantially flat spectral input.

Fig.10 is a graph showing an example of bit allocation for a substantially flat signal input exhibiting high tonality.

Fig.11 is a graph showing an example of the input signal spectrum and the quantization noise spectrum for a substantially flat signal input exhibiting high tonality.

Fig.12 is a block circuit diagram showing an example of a high efficiency decoding device.

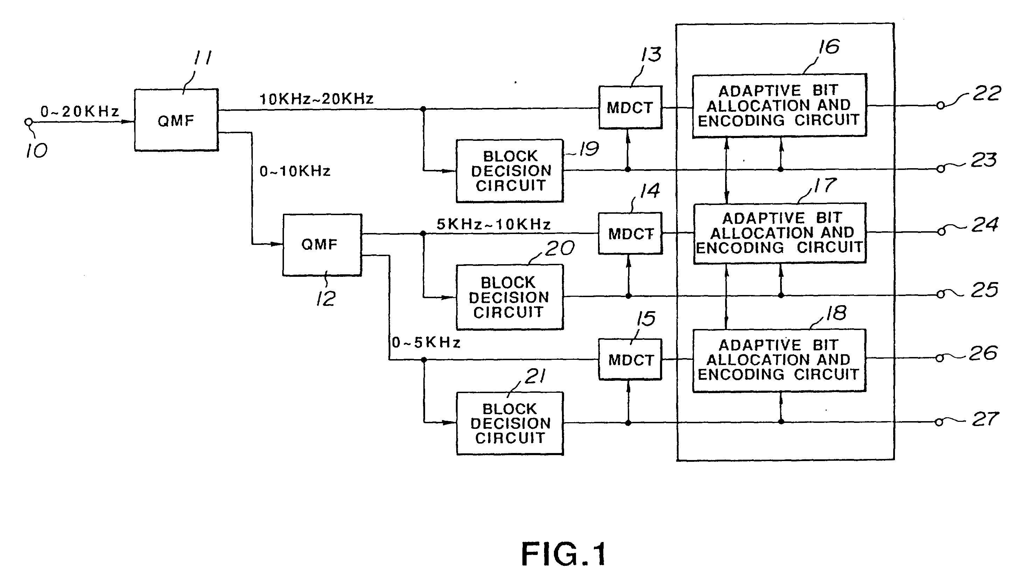

Fig.1 shows a high efficiency encoding device as a data compression side of the data compression expansion device embodying the present invention. The high efficiency encoding device is adapted for encoding digital input signals, such as audio PCM signals, by high efficiency encoding using sub-band coding (SBC), adaptive transform coding (ATC) and adaptive bit allocation.

With the high efficiency encoding device of the present embodiment, as shown in Fig.1, digital input signals, supplied to an input terminal 10, are divided at a predetermined time interval along the time scale, while being divided into plural frequency bands along the frequency scale for forming sub-blocks divided along both the time scale and the frequency scale. The number of allocated bits is adaptively determined for each of these sub-blocks and high efficiency encoding is performed using the thus determined numbers of bit.

The encoding device includes adaptive bit allocation encoding circuits 16, 17, 18, as bit allocation means, by means of which the number of bits that may be employed for bit allocation for digital input signals is divided or allocated into a fraction which depends on the allowable noise spectrum associated with human aural characteristics such as masking effects, a minimum audibility curve or equal-loudness curves, and a fraction which depends on a signal magnitude or signal energies within each of the above-mentioned sub-blocks resulting from sub-division with respect to both the time and the frequency.

Besides a number of bits employed for bit allocation for the digital input signals, at least a number of bits for the subsidiary information are allocated by the adaptive bit allocation encoding circuits 16 to 18. The subsidiary information includes the floating information (floating coefficients) employed for block floating and the bit length information corresponding to the numbers of allocated bits.

The block floating is an operation of multiplying the words in each of the sub-blocks by a common value for increasing the values of the words for improving quantization accuracy.

Specifically, a maximum one of absolute values of the words in the blocks is found and a common floating coefficient for the floating is selected so as not to saturate the maximum absolute value.

The simplest way is by 6 dB floating by bit shifting. The block floating is usually performed for spectral signals produced by transforming time-domain audio signals within a frame of the above-mentioned predetermined time interval into frequency-domain signals.

On the other hand, in the high-efficiency encoding in which data of each block processed by block-floating are quantized by adaptive bit allocation for transmission, signal energies are found from block to block and allowable noise energies which take the masking effects into account are found based on these signal energies.

Besides, the word lengths associated with the number of allocated bits are found from the allowable noise energies for each block and the floating coefficients, that is scaling factors, for the block floating for each block.

Meanwhile, the floating coefficient is obtained by multiplying a peak value or a mean value, for example, of the block-by-block spectral signals, by a predetermined coefficient. The word length corresponding to the number of bit allocation is found on the basis of the allowable noise energies associated with the block-by-block signal energies of the spectral signals.

It is also possible with the present embodiment of the high efficiency encoding device to constitute the sub-blocks by further dividing an output of e.g. the SBC system, that is, by dividing the digital input signals produced by division along the frequency scale without previous division along the time scale, orthogonally transforming and encoding the frequency components.

That is, with the present embodiment of the high efficiency encoding device, shown in Fig.1, input digital signals, that is input audio PCM signals, are divided by a filter into plural frequency bands and orthogonally transformed from one band to another to produce spectral frequency-domain data which are encoded by adaptive bit allocation for each of the critical bands, which take characteristics of the human auditory sense into account as later explained, or for each of smaller critical sub-bands for a higher frequency range which are obtained by sub-dividing each of the critical bands. The non-time-block-forming frequency division by e.g. a filter may be made so that the resulting frequency bands are of an equal bandwidth.

In the present embodiment, the block size is adaptively changed before orthogonal transform depending on input signals, at the same time that floating is carried out for frequency blocks obtained by further sub-dividing the critical bands.

Meanwhile, the critical band means the frequency band which takes characteristics of the human auditory sense into account, that is the frequency band of a narrow bandwidth noise masking a pure sound in the vicinity of the frequency of the pure sound. The critical bands become broader the higher the frequency range of the bands. The entire frequency range of 0 to 20 kHz is divided into 25 critical bands. That is, referring to Fig.1, audio PCM signals of 0 to 20 kHz are supplied to input terminal 10. These input signals are divided by a band-division filter, such as QMF, into a band in a range of from 0 to 10 kHz and a band in a range of 10 to 20 kHz. The signals in the range of from 0 to 10 kHz are additionally divided by a frequency dividing filter 12, such as QMF, into a band in a range of from 0 to 5 kHz and a band in a range of 5 to 10 kHz. The signals in the ranges of from 10 to 20 kHz, from 5 to 10 kHz and from 0 to 5 kHz, from the frequency dividing filters 11, 12, are supplied to MDCT circuits 13, 14 and 15, illustrative of orthogonal transform circuits, and block size decision circuits 19, 20 and 21. The block size decision circuits 19 to 21 set the bloc size for MDCT processing and the MDCT circuits 13 to 15 perform MDCT operations on the signals from the frequency dividing filters 11, 12 with the block size as set by the block size decision circuits 19 to 21.

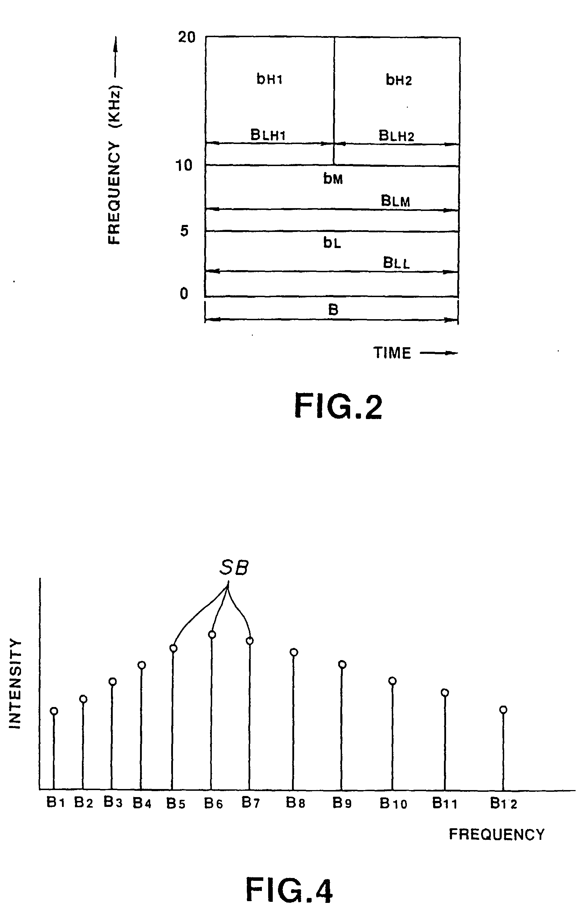

Fig.2 shows practical examples of the block sizes based on which the processing by MDCT circuits 13 to 15 is to be performed. In the practical example of Fig.2, the bandwidth is increased in a direction towards the higher frequency range and the time block lengths are decreased in the same direction for improving the temporal resolution.

That is, for signals in the lower frequency range of 0 to 5 kHz and in the mid frequency range of 5 to 10 kHz, the number of samples for blocks (block lengths) bL, bM is set to e.g. 256, whereas, for signals in the higher frequency range of 10 to 20 kHz, the block length is set so as to be one-half the block lengths BLL, BLM of the low-range and mid-range blocks bL, bM, that is, BLL/2, BLM/2 or block lengths BLH1, BLH2, respectively.

In the present embodiment, the number of orthogonal transform block samples is selected to be equal from band to band. Also, each band in the present embodiment may be adaptively divided into two or four blocks for the possible cases of larger temporal signal changes.

Turning to Fig.1, frequency-domain spectral data or MDCT coefficient data, obtained by MDCT processing by the MDCT circuits 13 to 15, are grouped together from one critical band to another or from one critical sub-band to another so as to be transmitted to adaptive bit allocation encoding circuits 16, 17, 18.

The adaptive bit allocation encoding circuits 16, 17, 18 re-quantize the spectral data or the MDCT coefficient data, responsive to the allocated numbers of bits, from one critical band to another or from one critical sub-band to another. The concrete arrangement of these adaptive bit allocation encoding circuits 16 to 18 is explained subsequently.

The encoded data are outputted at output terminals 22, 24, 26. The floating information indicating the scaling used in normalization and the bit length information indicating the bit length used for quantization are simultaneously transmitted along with the encoded data.

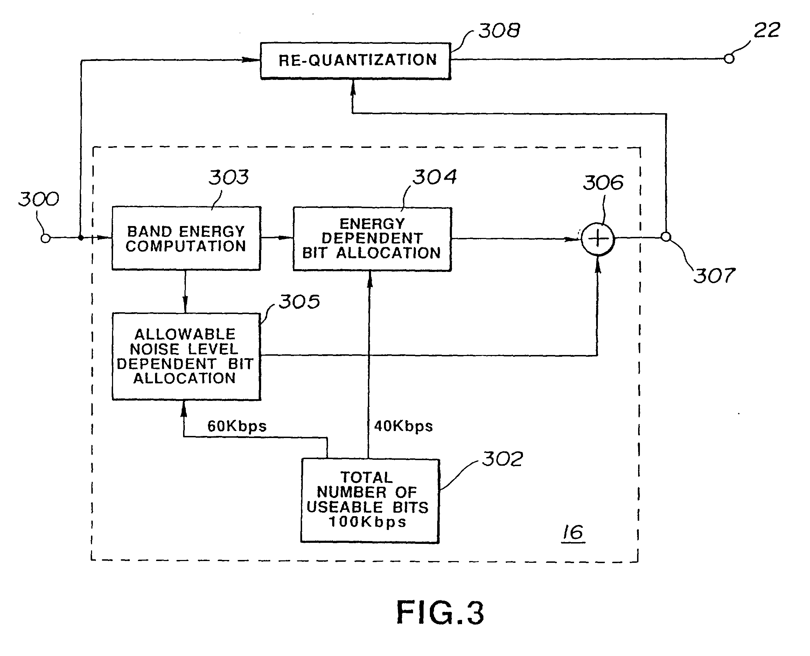

Referring to Fig.3, a practical arrangement of the above-mentioned adaptive bit allocation encoding circuit is explained.

The MDCT coefficients from the MDCT circuits 13, 14 and 15 shown in Fig.1 are supplied to an input terminal 300 of each of the adaptive bit allocation encoding circuits 16, 17, 18 shown in Fig.3, and thence to an energy calculating circuit 303 for calculating band energies. Fig.3 shows one 16 of the adaptive bit allocation encoding circuits 16 to 18.

The band energy calculating circuit 303 calculates the energies in each of the critical bands or critical sub-bands by calculating e.g. the root-mean-square values of the amplitudes in each of the bands or sub-bands.

That is, the band energy calculating circuit 303 calculates signal energies from one critical band to another or from one critical sub-band to another. Meanwhile, peak or mean values of amplitude values may also be employed in place of the signal energies, so that the term "signal energies" used herein broadly indicate these signal characteristics.

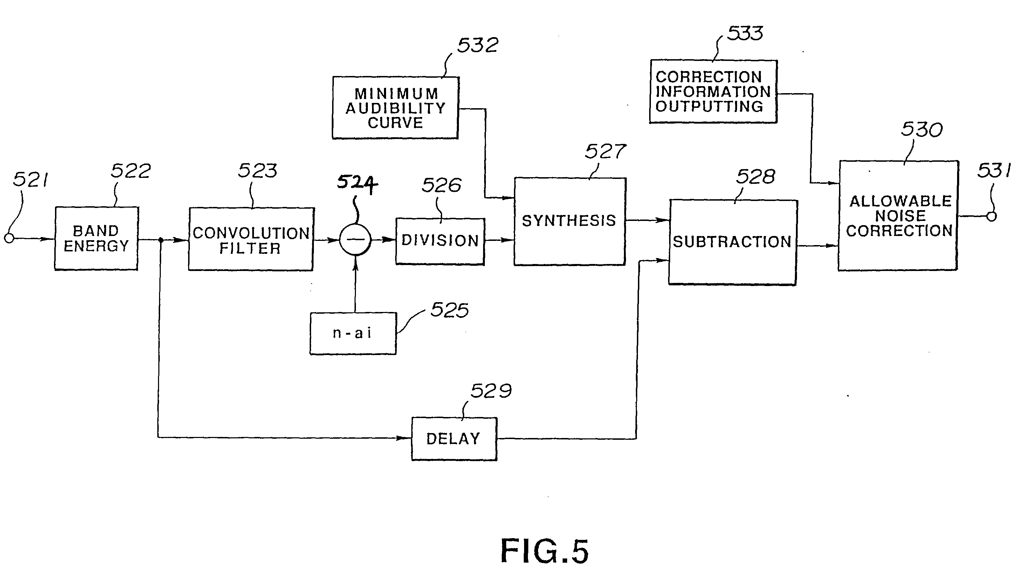

The spectrum of the sum of energies from one critical band to another or from one critical sub-band to another, as calculated by the energy calculating circuit 303, is represented by the Burke spectrum SB shown in Fig.4.

In Fig.4, the critical bands or critical sub-bands are indicated by 12 bands B1 to B12 for ease of understanding.

The energy values of the respective bands or sub-bands, as computed by the energy calculating circuit 303, are supplied to an energy-dependent bit allocation circuit 304. The energy-dependent bit allocation circuit 304 executes bit allocation using 40 Kbps, from the total number of useable 100 Kbps, in the present embodiment. Bit allocation is performed so as to be proportionate to logarithmic values of the band or sub-band energies so that the noise produced on quantization by the allocated bits becomes the white noise which is less obtrusive to the listener. Meanwhile, the total number of the useable bits is set in a total useable bit number outputting circuit 302. However, the total number of the useable bits may also be set from outside.

The output of the energy calculating circuit 303 is transmitted to an allowable noise calculating circuit 305 which calculates the quantity of the allowable noise from one critical band to another based on the spectral data of each of the critical bands taking into account the above-mentioned masking effects. The number of bits to be allocated to each of the critical bands is determined in dependence upon the quantity of the allowable noise and energies or peak values from one critical band to another.

The number of bits used in the allowable noise calculating circuit 305 is 60 Kbps among the total number of bits of 100 Kbps as set by the total useable bit number setting circuit 302.

An output of the allocated bit number from the energy- dependent bit allocation circuit 304 and an output of the allocated bit number from the allowable noise calculating circuit 305 are transmitted to a total bit number calculating circuit 306. The total bit number calculating circuit 306 sums the numbers of the allocated bit numbers together. The total bit number, as calculated by the total bit number calculating circuit 306, is supplied via terminal 307 to a re-quantization circuit 308 for re-quantizing the spectral data or MDCT coefficient data. The data re-quantized and encoded in this manner are outputted at output terminals 22, 24, 26 shown in Fig.1.

The allowable noise calculating circuit 305 is hereinafter explained in detail. Fig.5 shows, in a block circuit diagram, an illustrative practical example of the allowable noise calculating circuit 305 of each of the adaptive bit allocation encoding circuits 16 to 18.

Fig.5 shows, for ease of understanding, the components of the circuit from the input terminal 300 up to the energy calculating circuit 303 of Fig.3. In Fig.5, the input terminal 300 of Fig.3 is indicated as terminal 521 and the energy calculating circuit 303 is indicated as energy calculating circuit 522.

In Fig.5, frequency-domain spectral data from the MDCT circuits 13 to 15 are supplied to input terminal 521.

The frequency-domain spectral data are supplied to band energy calculating circuit 522 where the signal energies are calculated by calculating the square sum values of the signal amplitudes from one critical band to another.

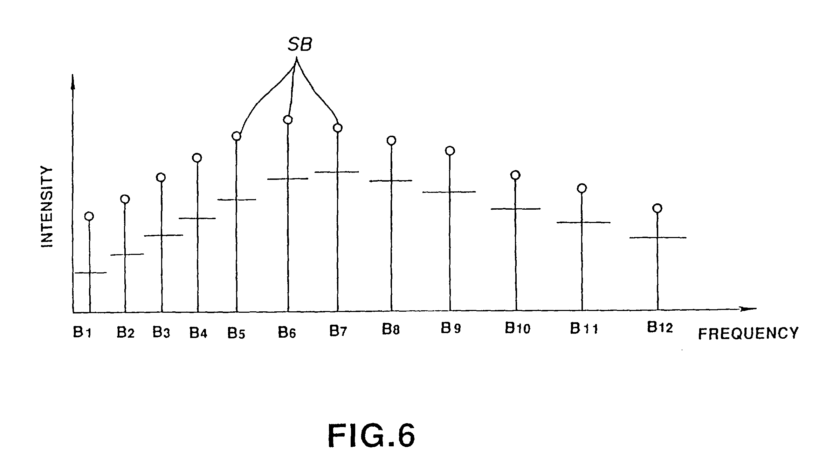

The peak or mean values of the signal amplitudes may also be employed in place of the band energies, as mentioned previously. The energy calculating circuit 522 outputs a spectrum called the Burke spectrum SB as indicated for example in Fig.6.

However, in Fig.6, the number of the critical bands is set to 12 (B1 to B12) for ease of understanding.

For taking into account the effect of the Burke spectrum SB on masking, each value of the Burke spectrum SB is multiplied by a predetermined weighting function and summed to one another by way of convolution.

An output of the energy calculating circuit 522, that is each value of the Burke spectrum, is transmitted to a convolution filter circuit 523. The convolution filter circuit 523 is made up of a plurality of delay elements for sequentially delaying input data, a plurality of multipliers for multiplying each delay element output by a weighting function, and an additive unit for calculating the sum of the multiplier outputs.

The total sum value is calculated by such convolution. Meanwhile, the masking effects are based on the aural characteristics and may be classified into a temporally continuous masking effects by time-domain audio signals and concurrent masking effects by frequency-domain signals. By the masking effects, any noise in a masked speech portion is masked and becomes imperceptible.

Thus, any noise in the masked speech portion is the allowable noise.

As practical examples of the multiplication coefficients of the multipliers of the convolution filter circuit 523, that is filtering coefficients, the multiplication coefficients for multipliers M-1, M-2, M-3, M+1, M+2 and M+3 may be 0.15, 0.0019, 0.0000086, 0.4, 0.06 and 0.007, for the multiplication coefficient 1 of a multiplier M, for an arbitrary band, M being an arbitrary number of from 1 to 25, so that convolution of the Burke spectrum SB may be achieved by multiplying the outputs of the associated delay elements with the above-mentioned coefficients.

An output of the convolution filter circuit 523 is supplied to a subtractive node 524 for finding a level α corresponding to the allowable noise level in the above-mentioned convolution region. Meanwhile, the level α corresponding to the allowable noise level is such a level which will give the allowable noise level for each of the critical bands on deconvolution as will be explained subsequently.

The subtractive node 524 is supplied with a function representing the masking level for finding the level α (allowance function). The level α is controlled by increasing or decreasing the level α. The allowance function is supplied from a (N-ai) function generator 525 as hereinafter explained.

That is, if the serial number from the lower side of the critical bands is indicated as i, the level α corresponding to the allowable noise level is given by$\text{α = S - (N - ai)}$ where n, a are constants, S is an intensity of the convolved Burke spectrum. In the above formula, (n - ai) is the allowance function. For example, n and a may be so set that n = 38 and a = -0.5.

The level α is found in this manner and transmitted to a divider 526 for deconvolving the level α in the convolved region. By such deconvolution, the masking threshold value may be found from the level α. Although the deconvolution necessitates complex computation, deconvolution is performed in the present embodiment in a simplified fashion by using the divider 526.

The masking threshold value is transmitted via a synthesis unit 527 to a subtractor 528. The output of the band energy detection circuit 522, that is the above-mentioned Burke spectrum SB is supplied to the subtractor 528. Consequently, the masking threshold is subtracted from the Burke spectrum SB in the subtractor 528, so that, as shown in Fig.6, the portion of the Burke spectrum SB below the masking threshold is masked. An output of the subtractor 528 is transmitted to an allowable noise correction circuit 530 as later explained.

A delay circuit 529 is provided for delaying the Burke spectrum from the energy detection circuit 522 to take account of the delay caused in the circuitry upstream of the synthesis circuit 527.

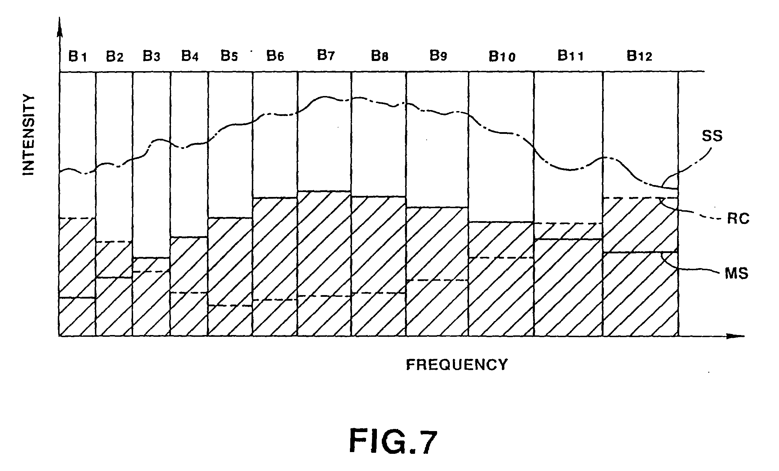

Meanwhile, data from minimum audibility curve generating circuit 532, indicating human aural characteristics, as shown by a dotted line in Fig.7, and the above-mentioned masking threshold MS, may be synthesized in the synthesis circuit 527.

If a noise has an absolute value lower than the minimum audibility curve RC, such noise is imperceptible. The minimum audibility curve RC becomes different with difference in the reproduced sound volume, even although the same coding method is employed.

In a practical digital system, since there is no marked difference in the manner of entrance of the music into the 16-bit dynamic range, it may be surmised that, if the quantization noise in the frequency range in the vicinity of 4 kHz, which is most perceptible to ears is not heard, the quantization noise less than the level of the minimum audibility curve RC is not perceptible in frequency ranges other than the 4 kHz range.

Consequently, if assumed that the system is used in such a manner that the noise in the vicinity of 4 kHz word length of such system is not heard, the allowable noise may be produced by synthesizing both the minimum audibility curve RC and the masking threshold MS. The allowable noise level in such case is up to dotted lines in Fig.7. Meanwhile, in the present embodiment, the 4 kHz level of the minimum audibility curve is set to the minimum level corresponding to 20 bits. In Fig.7, the signal spectrum SS is also shown by a chain-dotted line curve.

The allowable noise correction circuit 530 corrects the allowable noise level in the output of the subtractor 528 based on the information of the equal-loudness curve transmitted from the correction information outputting circuit 533.

The equal-loudness curve, also termed an equal loudness sensitivity curve, is one of characteristic curves concerning the human aural sense. It is a curve obtained by connecting the pressures of tones of respective frequencies heard with the same loudness as a pure tone at 1 kHz. It may be seen from the equal-loudness curve that a tone in the vicinity of 4 kHz is heard with the same loudness as the tone at 1 kHz even if the sound pressure is lowered by 8 to 10 dB from that at 1 kHz, whereas a tone in the vicinity of 50 Hz cannot be heard with the same loudness as the sound at 1 kHz unless the sound pressure is higher than that at 1 kHz by about 15dB.

Consequently, the noise exceeding the level of the minimum audibility curve becomes the allowable noise if such noise has frequency characteristics afforded by the equal-loudness curve, so that no hindrance is incurred by such noise to the human auditory sense.

It is seen from above that correction of the allowable noise level taking into account the equal-loudness curve is matched to the characteristics of the human aural sense. The above-mentioned spectral contour, which depends on the above-mentioned allowable noise level, is formed by bit allocation using 60 Kbps of the above-mentioned total number of useable bits of 100 Kbps.

An output of the subtractor 528 is outputted via the allowable noise correction circuit 530 at output terminal 531 and thence supplied to a memory, not shown, in which the information concerning the number of allocated bits, for example, is stored.

The memory outputs an information concerning the number of allocated bits for each band responsive to an output produced from the subtractor 528 via the allowable noise correction circuit 530, that is the level of the difference between the energies of the bands and the output of the noise level setting means.

Using the bit allocation number information and the information from the energy dependent bit allocation circuit 304 shown in Fig.3, the adaptive bit allocation encoding circuits 16 to 18 of Fig.1 quantize the frequency-domain spectral data from the MDCT circuits 13 to 15, by quantization circuit 308, in accordance with the number of bits allocated to each band.

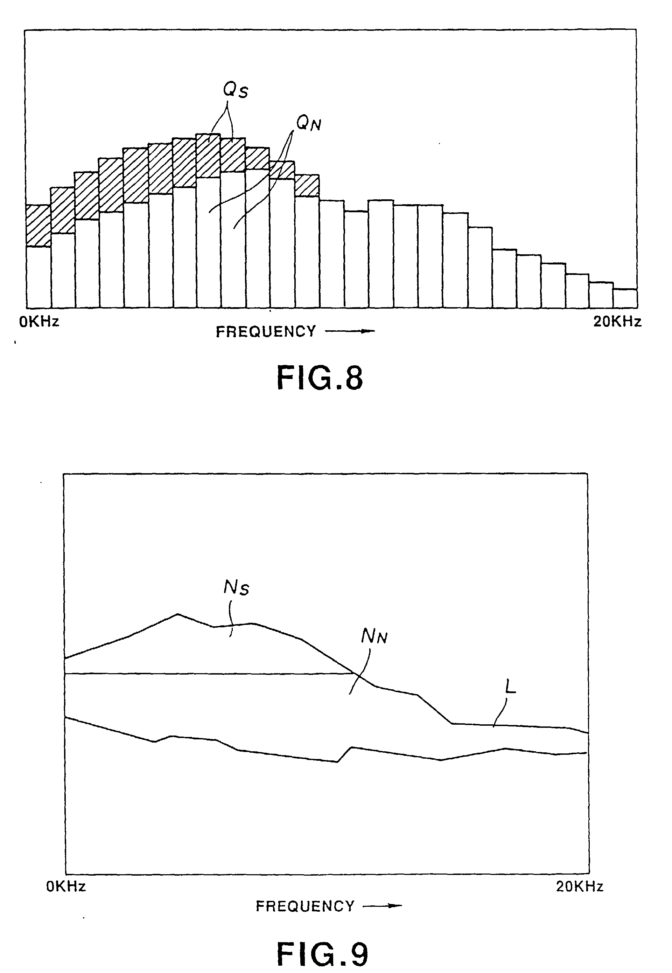

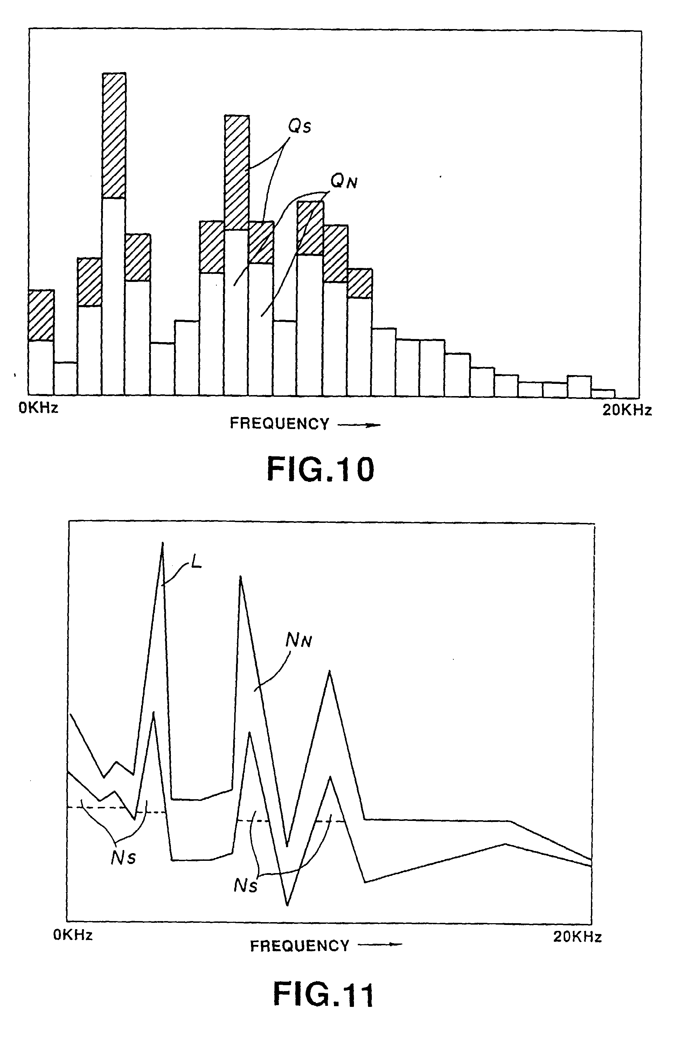

In the above-described present embodiment, ultimate bit allocation is determined as a sum of bit allocation dependent on band energies and bit allocation dependent on the allowable noise level. The manner of bit allocation and the manner of input signal spectrum and quantization noise associated therewith are shown in Figs.8 and 10 and in Figs.9 and 11, respectively.

In Figs.8 and 9, the input signal has a flatter spectrum. In Fig.8, a hatched area indicates the bit quantity allocated in dependence upon the signal energies, while an unhatched area indicates the bit quantity allocated in dependence upon he allowable noise level.

In Fig.9, L indicates the signal level, while an area NS indicates the noise decrease due to signal level dependent bit allocation and an area NN indicates the noise decrease due to allowable noise level dependent bit allocation.

It is seen from Figs.8 and 9 that the allowable noise level dependent bit allocation is useful for realizing a high S/N ratio throughout the entire frequency range. However, in this case, smaller numbers of bits are allocated to lower and higher frequency ranges because these frequency ranges are less critical to the auditory sense. The signal energy level dependent bit allocation is mainly in a mid to low frequency range with a higher signal level in order to produce less obtrusive white noise.

Conversely, if the input signal spectrum exhibits high tonality, as shown in Figs.10 and 11, a decrease in the quantization noise due to signal energy level dependent bit allocation is utilized for decreasing the noise within an extremely narrow frequency range.

The allowable noise level dependent bit allocation is concentrated to a lesser extent. By the sum of these noise decrease effects, solitary spectrum input signals may be improved in characteristics. In Fig.10, hatched areas QN and unhatched areas NN indicate the signal level dependent bit quantity and the allowable noise level dependent bit quantity, respectively. In Fig.11, L, NS and NN indicate the signal level, the noise decrease due to signal level dependent bit allocation the noise decrease due to allowable noise level dependent bit allocation, respectively.

Encoded signals, compressed using the above-mentioned allocated quantity, may be transmitted or received over a transmission line or recorded on or reproduced from a suitable recording medium, which may, for example, be a disc-shaped recording medium, such as an optical disc, magneto-optical disc, hard disc or a floppy disc. The recording medium may also be a tape-shaped recording medium, such as a magnetic tape or an optical tape, or a semiconductor memory.

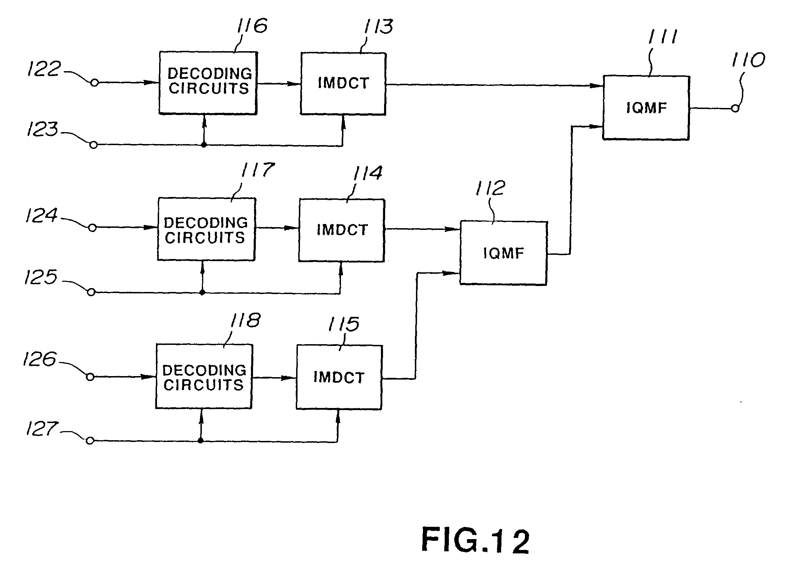

Fig.12 shows a data-expanding side device, that is a decoding device, for decoding signals encoded by high efficiency encoding by the above-described high efficiency encoding device.

Referring to Fig.12, the quantized MDCT coefficients of the respective bands are inputted to input terminals 122, 124, 126, while the corresponding block size data are supplied to input terminals 123, 125, 127. These input signals are supplied via the input terminals to decoding circuits 116, 117, 118, which release bit allocation using the above-mentioned adaptive bit allocation information.

Outputs of the decoding circuits 116 to 118 are transmitted to IMDCT circuits 113, 114, 115, respectively. The block size information is also supplied via input terminals 123, 125, 127 to the IMDCT circuits 113, 114, 115, respectively. Time-domain signals for partial frequency ranges from IMDCT circuits 113 to 115 are decoded into time-domain signals for the entire frequency range by IQMF circuits 112, 111 so as to be transmitted to downstream side circuitry via output terminal 110.

In the decoding device, shown in Fig.12, encoded data from the high-efficiency encoding device may be decoded by a small-sized device, while decoded signals with high sound quality may be produced.

It will be seen that the arrangement described above provides a data compression expansion device in which the total number of bits that may be used for bit allocation for input digital signals is divided between the number of bits which is varied depending on the allowable noise spectrum based on aural characteristics and the number of bits which is varied depending on the signal intensities in sub-blocks obtained by subdividing input audio signals both along the time scale and along the frequency scale. Consequently, the noise level as perceived by the aural sense may be diminished even with input audio signals exhibiting a wide spectral distribution, such as music signals. If the input signal has a spectrum having a larger signal in a frequency range, such as a sinusoidal wave, bit allocation may be concentrated in this range to improve the S/N ratio. With the bit allocation system described above, aurally desirable output signals may be produced, while, if the input signal is a lone spectrum signal, such as a 1 kHz sinusoidal wave, it becomes possible to produce satisfactory characteristics by a smaller quantity of computation without the necessity of adjusting the bit quantity repeatedly.

## Claims

1. A method for bit allocation in compression encoding of digital speech signals in which the digital speech signals are divided at a predetermined time interval into plural frequency bands so as to be sub-divided along both the time scale and the frequency scale to form a plurality of sub-blocks and data encoding is performed using an allocated number of bits determined for each of said sub-blocks, the method comprising:
dividing the total number of bits that may be used for bit allocation into at least two portions;
allocating bits of one of said portions in dependence upon an allowable noise spectrum based on aural characteristics, said aural characteristics comprising at least a masking threshold (MS) and a minimum audibility curve (RC);
allocating bits of the remaining portion in dependence upon signal intensities in each of said sub-blocks; and
combining the bits of said two portions together for each of said sub-blocks to determine the number of bits allocated to each of said sub-blocks.

2. A method as claimed in claim 1, wherein a number of bits for subsidiary information is allocated, said subsidiary information being at least the floating information and bit length information corresponding to the numbers of allocated bits.

3. A method as claimed in claim 1 or claim 2, wherein said aural characteristics comprising said masking threshold (MS) and said minimum audibility curve (RC) are corrected by an equal-loudness curve.

4. A method as claimed in any preceding claim, wherein the signal intensities in each of said sub-blocks are signal energies in said sub-blocks represented by a root-mean-square value of amplitudes in each of said sub-blocks.

5. A method as claimed in any preceding claim, wherein bit allocation is effected such that the number of bits allocated in dependence upon the allowable noise spectrum based on said aural characteristics is larger than the number of bits allocated in dependence upon the signal intensities in each of the sub-blocks.

6. A method as claimed in any preceding claim, wherein said sub-blocks are obtained by subdivision along the time scale into a low-range spectral portion, a mid-range spectral portion and a high-range spectral portion, and by subdivision along the frequency scale at least in part into frequency bands coincident with critical bands.

7. A device for bit allocation in compression encoding of digital speech signals in which the digital speech signals are divided at a predetermined time interval into plural frequency bands so as to be sub-divided along both the time scale and the frequency scale to form a plurality of sub-blocks and data encoding is performed using an allocated number of bits determined for each of said sub-blocks, the device comprising:
means (302) for dividing the total number of bits that may be used for bit allocation into at least two portions;
aural characteristics generating means (305) comprising masking threshold generating means (523 to 526) and minimum audibility curve generating means (532), said aural characteristics generating means (305) combining an output of said masking threshold generating means and an output of said minimum audibility curve generating means to generate aural characteristics;
means (305) for allocating bits of one of said portions in dependence upon an allowable noise spectrum based on said aural characteristics;
means (304) for allocating bits of the remaining portion in dependence upon signal intensities in each of said sub-blocks; and
means (306) for combining the bits of said two portions together for each of said sub-blocks to determine the number of bits allocated to each of said sub-blocks.

8. A device as claimed in claim 7, wherein said aural characteristics generating means includes equal-loudness curve generating means (533, 530) for correcting the combined output of said masking threshold generating means and said minimum audibility curve generating means.

## Patentansprüche

1. Verfahren zur Bitzuteilung bei der Kompressionscodierung von digitalen Sprachsignalen,
bei dem die digitalen Sprachsignale in einem vorgegebenen Zeitintervall in mehrere Frequenzbänder so geteilt werden, daß sie sowohl entlang der Zeitachse als auch entlang der Frequenzachse unterteilt sind, um mehrere Teilblöcke zu bilden, und
bei dem die Datencodierung mit einer zugeteilten Bitzahl erfolgt, die für jeden der genannten Teilblöcke festgelegt wird,
wobei das Verfahren umfaßt:
Aufteilen der Gesamtzahl der für die Bitzuteilung zu verwendenden Bits in wenigstens zwei Teilmengen,
Zuteilen von Bits wenigstens eines dieser Teilmengen in Abhängigkeit von einem zulässigen Rauschspektrum auf der Basis von Hörkennlinien, wobei diese Hörkennlinien zumindest eine Maskierschwelle (MS) und eine Hörschwellenkurve (RC) umfassen,
Zuteilen von Bits der verbleibenden Teilmenge in Abhängigkeit von den Signalintensitäten in jedem der genannten Teilblöcke und
Kombinieren von Bits der zwei Teilmengen für jeden der Teilblöcke, um die Anzahl der jedem dieser Teilblöcke zugeteilten Bitzahl festzulegen.

2. Verfahren nach Anspruch 1, bei dem eine Anzahl von Bits für eine Hilfsinformation zugeteilt wird, wobei diese Hilfsinformation zumindest die Gleitinformation und die Bitlängeninformation umfaßt, die den zugeteilten Bitzahlen entsprechen.

3. Verfahren nach Anspruch 1 oder 2, bei dem die Hörkennlinien, die die Maskierschwelle (MS) und die Hörschwellenkurve (RC) umfassen, durch eine Kurve gleicher Lautstärke korrigiert werden.

4. Verfahren nach einem der vorhergehenden Ansprüche, bei dem die Signalintensitäten in jedem der Teilblöcke die Signalenergien in diesen Teilblöcken sind, die durch den quadratischen Mittelwert der Amplituden in jedem dieser Teilblöcke repräsentiert werden.

5. Verfahren nach einem der vorhergehenden Ansprüche, bei dem die Bitzuteilung so durchgeführt wird, daß die in Abhängigkeit von dem zulässigen Rauschspektrum auf der Basis der genannten Hörkennlinien zugeteilte Bitzahl größer ist als die in Abhängigkeit von den Signalintensitäten in jedem der Teilblöcke zugeteilte Bitzahl.

6. Verfahren nach einem der vorhergehenden Ansprüche, bei dem die Teilblöcke gewonnen werden, indem entlang der Zeitachse in einen unteren Spektralbereich, einen mittleren Spektralbereich und einen hohen Spektralbereich unterteilt wird und auf der Frequenzachse zumindest teilweise in Frequenzbänder unterteilt wird, die mit kritischen Frequenzbändern zusammenfallen.

7. Vorrichtung zur Bitzuteilung bei der Kompressionscodierung von digitalen Sprachsignalen,
bei der die digitalen Sprachsignale in einem vorgegebenen Zeitintervall in mehrere Frequenzbänder so geteilt werden, daß sie sowohl entlang der Zeitachse als auch entlang der Frequenzachse unterteilt sind, um mehrere Teilblöcke zu bilden, und
bei der die Datencodierung mit einer zugeteilten Bitzahl erfolgt, die für jeden der genannten Teilblöcke festgelegt wird,
wobei die Vorrichtung aufweist:
eine Einrichtung (302) zum Aufteilen der Gesamtzahl der für die Bitzuteilung zu verwendenden Bits in wenigstens zwei Teilmengen,
eine Einrichtung (305) zum Generieren von Hörkennlinien mit einer Einrichtung (323 bis 326) zum Generieren einer Maskierschwelle und einer Einrichtung (532) zum Generieren einer Hörschwellenkurve, wobei diese Einrichtung (305) zum Generieren von Hörkennlinien das Ausgangssignal der Einrichtung zum Generieren der Maskierschwelle (MS) und das Ausgangssignal der Einrichtung zum Generieren der Hörschwellenkurve miteinander kombiniert, um Hörkennlinien zu generieren,
eine Einrichtung (305) zum Zuteilen von Bits eines der genannten Teilmengen in Abhängigkeit von dem zulässigen Rauschspektrum auf der Basis der genannten Hörkennlinien,
eine Einrichtung (304) zum Zuteilen von Bits der verbleibenden Teilmenge in Abhängigkeit von den Signalintensitäten in jedem der genannten Teilblöcke und
eine Einrichtung (306) zum Kombinieren der Bits der zwei Teilmengen für jeden der Teilblöcke, um die Anzahl der jedem dieser Teilblöcke zugeteilten Bitzahl festzulegen.

8. Vorrichtung nach Anspruch 7, bei der die Einrichtung zum Generieren von Hörkennlinien eine Einrichtung (533, 530) zum Generieren einer Kurve gleicher Lautstärke für das Korrigieren der kombinierten Ausgangssignale der Einrichtung zum Generieren der Maskierschwelle und der Einrichtung zum Generieren der Hörschwellenkurve aufweist.

## Revendications

1. Procédé pour l'allocation binaire dans le codage de compression des signaux numériques vocaux dans lesquels les signaux numériques vocaux sont divisés à un intervalle de temps prédéterminé en plusieurs bandes de fréquence afin d'être sub-divisés à la fois le long de l'échelle temporelle et de l'échelle fréquentielle pour former une pluralité de sous-blocs et le codage de données est réalisé en utilisant le nombre alloué de bits déterminés pour chacun desdits sous-blocs, le procédé comprenant :
la division du nombre total de bits qui peut être utilisé pour l'allocation binaire en au moins deux parties ;
l'allocation binaire d'une desdites parties en fonction d'un spectre de bruit admissible sur la base des caractéristiques auditives, lesdites caractéristiques auditives comprenant au moins un seuil de masquage (MS) et une courbe d'audibilité minimum (RC) ;
l'allocation binaire de la partie restante en fonction des intensités du signal dans chacun desdits sous-blocs ; et
la combinaison des bits desdites deux parties ensemble pour chacun desdits sous-blocs pour déterminer le nombre de bits alloués à chacun desdits sous-blocs.

2. Procédé selon la revendication 1, dans lequel le nombre de bits pour des informations subsidiaires est alloué, lesdites informations subsidiaires étant au moins des informations flottantes et les informations de longueur de bit correspondant aux nombres de bits alloués.

3. Procédé selon la revendication 1 ou la revendication 2, dans lequel lesdites caractéristiques auditives comprenant ledit seuil de masquage (MS) et ladite courbe d'audibilité minimum (RC) sont corrigées par une courbe d'intensité sonore égale.

4. Procédé selon l'une quelconque des revendications précédentes, dans lequel les intensités de signal de chacun desdits sous-blocs sont des énergies de signal dans lesdits sous-blocs représentées par une valeur de racine carrée moyenne des amplitudes dans chacun desdits sous-blocs.

5. Procédé selon l'une quelconque des revendications précédentes, dans lequel l'allocation binaire est effectuée pour que le nombre de bits alloués en fonction du spectre de bruit admissible sur la base desdites caractéristiques auditives soit plus grand que le nombre de bits alloués en fonction des intensités de signal dans chacun desdits sous-blocs.

6. Procédé selon l'une quelconque des revendications précédentes, dans lequel lesdits sous-blocs sont obtenus par la subdivision le long de l'échelle temporelle dans une partie spectrale de gamme basse, une partie spectrale de gamme moyenne et une partie spectrale de gamme haute, et par la subdivision le long de l'échelle fréquentielle au moins dans une partie en bande de fréquence coïncidant avec des bandes critiques.

7. Dispositif pour l'allocation binaire dans un codage de compression des signaux numériques vocaux dans lequel les signaux numériques vocaux sont divisés à un intervalle de temps prédéterminé en plusieurs bandes de fréquence afin d'être subdivisés à la fois le long de l'échelle temporelle et de l'échelle fréquentielle pour former une pluralité de sous-blocs et le codage de données est réalisé en utilisant un nombre alloué de bits déterminés pour chacun desdits sous-blocs, le dispositif comprenant ;
un moyen (302) pour diviser le nombre total de bits qui peut être utilisé pour l'allocation binaire dans au moins deux parties ;
un moyen de génération de caractéristiques auditives (305) comprenant un moyen de génération de seuil de masquage (523 à 526) et un moyen de génération de courbe auditive minimum (532) ledit moyen de génération de caractéristiques auditives (305) combinant une sortie dudit moyen de génération de seuil de masquage et une sortie dudit moyen de génération de courbe auditive minimum pour générer des caractéristiques auditives ;
un moyen (305) pour allouer des bits d'une desdites parties en fonction d'un spectre de bruit admissible sur la base desdites caractéristiques auditives ;
un moyen (304) pour allouer des bits des parties restantes dépendant des intensités de signal dans chacun desdits sous-blocs ; et
un moyen (306) pour combiner les bits desdites deux parties ensemble pour chacun desdits sous-blocs pour déterminer le nombre de bits alloués à chacun desdits sous-blocs.

8. Dispositif selon la revendication 7, dans lequel ledit moyen de génération de caractéristiques auditives comprend un moyen de génération de courbe d'intensité sonore égale (533, 530) pour corriger la sortie combinée dudit moyen de génération du seuil de masquage et dudit moyen de génération de courbe d'audibilité minimum.
